**Europäisches Patentamt**

**European Patent Office**

**Office européen des brevets**

(19)

(11) Veröffentlichungsnummer : **0 393 341 B1**

(12)

# EUROPÄISCHE PATENTSCHRIFT

(45) Veröffentlichungstag der Patentschrift :
23.06.93 Patentblatt 93/25

(51) Int. Cl.$^5$ : **H04L 7/033**, H04J 3/06

(21) Anmeldenummer : **90104468.5**

(22) Anmeldetag : **08.03.90**

(54) **Verfahren und Anordnung zur Umwandlung eines lückenbehafteten Einlesetaktes in einen lückenfreien Auslesetakt.**

(30) Priorität : **23.03.89 DE 3909678**

(43) Veröffentlichungstag der Anmeldung :
**24.10.90 Patentblatt 90/43**

(45) Bekanntmachung des Hinweises auf die Patenterteilung :
**23.06.93 Patentblatt 93/25**

(84) Benannte Vertragsstaaten :
**AT BE CH DE DK ES FR GB GR IT LI NL SE**

(56) Entgegenhaltungen :
**EP-A- 0 266 588**

(73) Patentinhaber : **SIEMENS AKTIENGESELLSCHAFT Wittelsbacherplatz 2 W-8000 München 2 (DE)**

(72) Erfinder : **Lang, Hermann, Dipl.-Ing. Pendlweg 5 W-8120 Weilheim (DE)**

EP 0 393 341 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Die Erfindung bezieht sich auf ein Verfahren zur Umwandlung eines lückenbehafteten Einlesetaktes in einen lückenfreien Auslesetakt gleicher Impulsanzahl mittels Phasenregelung (PLL) und eine Anordnung zur Durchführung dieses Verfahrens.

Eine derartige Anordnung wird im Empfangsweg von digitalen Multiplexsystemen eingesetzt, da dort zur Rückgewinnung des jeweiligen Unterkanals dessen Takt benötigt wird. Sie ist aus der europäischen Patentanmeldung 0 266 588 A1 bekannt. Bei dieser Anordnung bereitet jedoch die Realisierung in einer integrierten Schaltung und besonders die Schaltungssimulation wegen des Auftreten von Spikes Schwierigkeiten.

Aufgabe der Erfindung ist es, ein Verfahren anzugeben, das für eine Realisierung in einer integrierten Schaltung geeignet ist.

Diese Aufgabe wird erfindungsgemäß mit den Verfahrensmerkmalen des Anspruchs 1 und den Anordnungsmerkmalen des Anspruchs 4 gelöst.

Anhand von Ausführungsbeispielen wird die Erfindung nachstehend näher erläutert:

Fig.1 zeigt eine erfindungsgemäße Anordnung,

Fig.2 zeigt ein Prinzipschaltbild eines Generators für den internen Takt,

Fig.3 zeigt den Generator detailliert und

Fig.4 zeigt einen Pulsplan zur Umschaltung

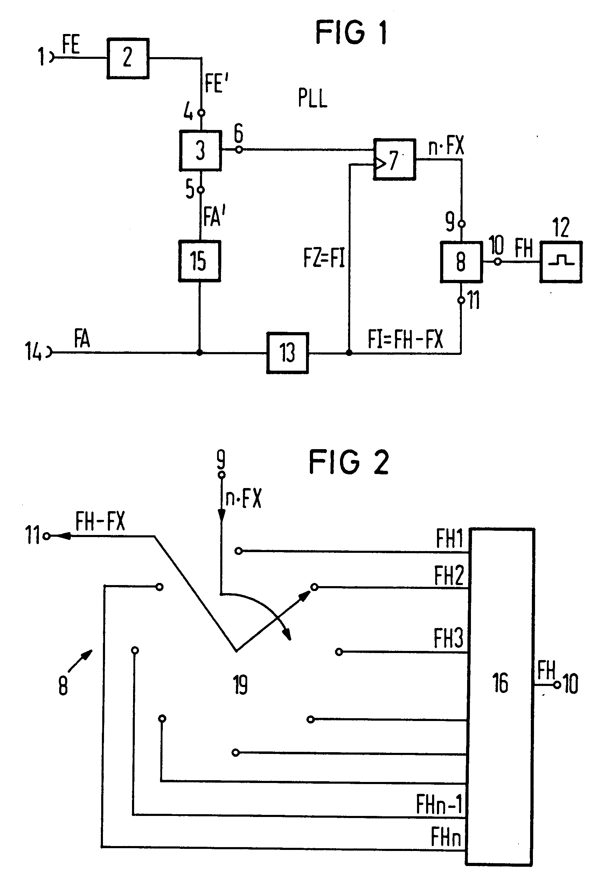

Die Anordnung nach Fig.1 enthält Frequenzteiler bzw. Einlesezähler 2, einen Phasendiskriminator 3, einen Frequenzzähler 7, einen Generator 8, einen Quarzoszillator 12, einen Frequenzteiler 13 und einen Frequenzteiler bzw. Auslesezähler 15.

Die Frequenz FE des Einlesetaktes am Takteingang 1 wird im Frequenzteiler 2 und die Frequenz FA des Auslesetaktes am Taktausgang 14 wird im Frequenzteiler 15 geteilt und dem Phasendiskriminator 3 zugeführt, der aus einem Exclusiv-ODER-Gatter bestehen kann. Das Tastverhältnis dieses Phasendiskriminators 3 steuert über seinen Ausgang 6 den Frequenzteiler 7. Immer wenn dieser mit einer Frequenz nFX überläuft, wird das vom Quarzoszillator 12 abgeleitete Ausgangssignal des Generators 8 am Anschluß 11 um eine Phase weitergeschaltet. Die daraus resultierende interne Frequenz FI = FH - FX ist jetzt gegen die Hilfsfrequenz FH des Quarzoszillators 12 soweit erniedrigt, daß sie beispielsweise nach einer Teilung durch sechzehn im Frequenzteiler 13 einen Auslesetakt einer Frequenz FA = 2048 kHz oder nach einer Teilung durch vier einen Auslesetakt einer Frequenz FA = 8448 kHz ergibt.

Fig. 2 zeigt ein Blockschaltbild des Generators 8. Dieser enthält eine Hilfstaktfolge-Erzeugungseinrichtung 16 zur Ableitung der Folge-Hilfstakte FHl bis FHn und $\overline{\overline{FHl}}$ bis $\overline{\overline{FHn}}$ aus dem Hilfstakt FH und einen Umschalter 19.

Durch regelmäßiges Umschalten des Umschalters 19 mit der Frequenz nFX entsteht am Ausgang 11 die interne Frequenz

FI = FH - FX.

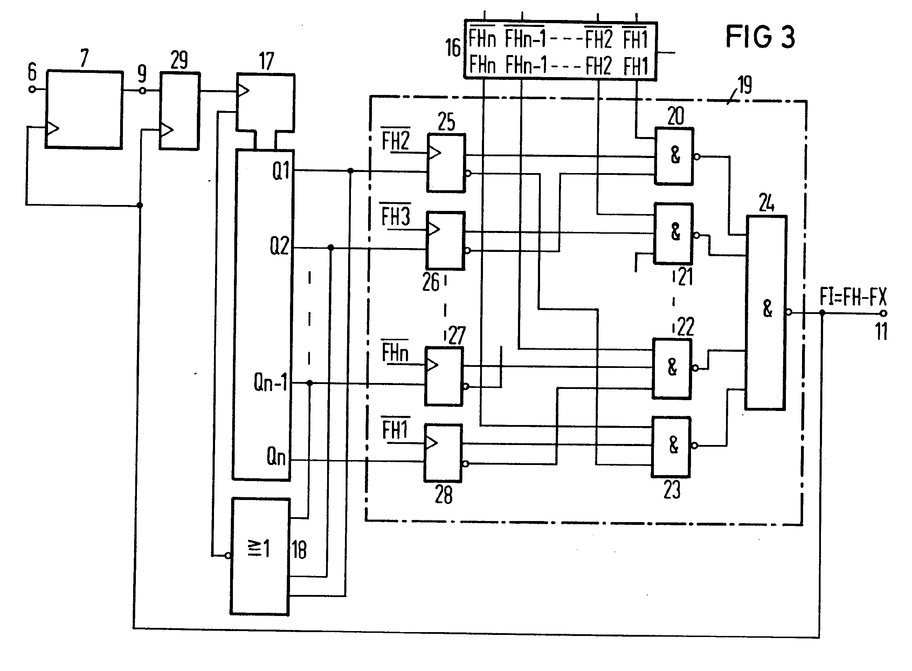

Eine praktische Realisierung des Generators 8 nach Fig.2 zeigt Fig.3 neben dem Summierzähler 7. Der Generator 8 enthält die Hilfstaktfolge-Erzeugungseinrichtung 16 ein n-stufiges Schieberegister 17, ein NOR-Gatter 18, einen Umschalter 19 mit NAND-Gattern 20 bis 24 und mit D-Flipflops 25 bis 28 sowie ein weiteres D-Flipflop 29.

Das Schieberegister 17 und das NOR-Gatter 18 bilden einen Schieberegisterring, weil das NOR-Gatter 18 nur dann einen logischen Zustand "H" abgibt, wenn außer dem letzten alle Ausgänge Ql - Qn des Schieberegisters 17 einen logischen Zustand "L" haben, so daß immer nur genau ein Ausgang einen logischen Zustand "H" besitzt.

Die aus dem Quarzgenerator 12 stammende Hilfsfrequenz FH ist größer als die n-fache Frequenz FA des Ausgangstaktes. Diese wird in der Hilfstaktfolge-Erzeugungseinrichtung 16 so aufbereitet, daß sie n Folge-Hilfstakte FHl bis FHn und $\overline{\overline{FHl}}$ bis $\overline{\overline{FHn}}$ mit einem Tastverhältnis 1:1 bildet, welche in aufsteigender Reihenfolge um jeweils 360°/n gegeneinander verschoben sind ( n > 2).

Das eigentliche Umschalten von einem Folge-Hilfstakt auf den nächsten, also das Einschalten eines neuen Weges zum Ausgang 11 und das Abschalten des bisherigen vom Ausgang 11 wird von der fallenden Flanke des nächsten invertierten Folge-Hilfstaktes in einem der D-Flipflops 25 - 28 ausgelöst und erfolgt dann, wenn die beiden beteiligten NAND-Gatter 20 - 23 den gleichen logischen Zustand aufweisen.

An die Stelle der NAND-Gatter 20 bis 24 können auch Logikschaltungen mit AND-, NOR- und ODER-Gattern treten.

Bei einer zulässigen Gesamttoleranz der Frequenz FE bzw. FA gilt für die Frequenz FH:

$$FH = N_{13} (FA + \Delta FA),$$

wobei $N_{13}$ der Teilungsfaktor des Frequenzteilers 13 ist.

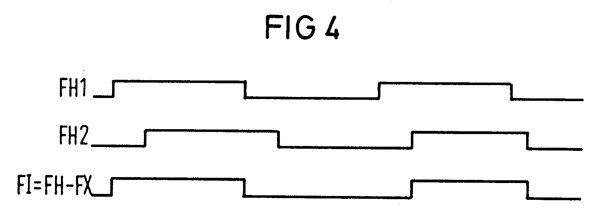

Durch Umschalten mit der Umschaltfrequenz nFX von einem Folge-Hilfstakt auf den nächsten, dessen Phase gegenüber den vorhergehenden um 360°/n verschoben ist, wird jeweils während des Umschaltevorgangs eine Periodenlänge am Ausgang 11 von 360° auf 360° + 360°/n, bezogen auf die Frequenz FH, verlängert, sodaß die resultierende Frequenz einen mittleren Wert FH - FX aufweist (Fig.4). Der Phasenfehler 360°/n der resultierenden Frequenz wird im folgenden Frequenzteiler 13 auf den Wert 360°/(n x $N_{13}$) verringert. Für die Frequenz FA gilt damit FA = (FH - FX)/$N_{13}$. Die Frequenz FX = FH - $N_{13}$ x FA x T kann innerhalb des Ziehbereichs der Phasenregelschleife zwischen 0 und maximal $N_{13}$ x 2 x $\Delta$ FA schwanken. Der genaue Wert wird vom Tastverhältnis T der Spannung am Ausgang 6 des Phasendiskriminators 3 bestimmt. Das umschalten von einem Folge-Hilfstakt auf den nächsten erfolgt immer dann, wenn der Frequenzteiler 7, der mit der resultierenden Frequenz FI = FH - FX getaktet und vom Phasendiskriminator 3 über den Enable-Eingang freigegeben wird, überläuft und am Ausgang 9 vom logischen Zustand "L" auf den logischen Zustand "H" übergeht. Dann wird jeweils nach dem Abtakten mit der steigenden Flanke der resultierenden Frequenz FI im D-Flipflop 29 über das Schieberegister 17 die Umschalteinrichtung 19 um einen Schritt weitergeschaltet.

Der Fang-Ziehbereich ergibt sich zu

$$2 \Delta FA = FA/(n \times N_7),$$

wobei $N_7$ der Teilungsfaktor des Frequenzteilers 7 ist. Die Hilfsfrequenz FH beträgt demnach

$$FH = FA \times N_{13} \times (1 + 1/(2 \times n \times N_7)).$$

Die nachfolgende Tabelle zeigt praktische Werte eines Ausführungsbeispiels, das bei Umschaltung der Teilungsfaktoren $N_7$ und $N_{13}$ für Frequenzen FA und FE von entweder 2048 kHz oder 8448 kHz geeignet ist.

| | 2048 kHz | 8448 kHz |
|---|---|---|
| FA = FE | | |
| n | 8 | 8 |
| $N_{13}$ | 16 | 4 |
| $N_7$ | 384 | 512 |
| $\frac{2\ FA}{FA}$ | 325,5 ppm | 244,1 ppm |
| FX max | 10,65 kHz | 8,25 kHz |
| FH | 33,77333 MHz | 33,7961 MHz |
| $N_2 = N_{15}$ | 32 | 32 |
| Eigenjitter Amplitude | 0,008 UI | 0,032 UI |
| Eigenjitter Frequenz | 43 kHz | 33 kHz im Mittel |
| Grenzfrequenz der Jitterübertagung | 7 Hz | 21 Hz |

**Patentansprüche**

1. Verfahren zur Umwandlung eines lückenbehafteten Einlesetaktes (FE) in einen lückenfreien Auslesetakt (FA) gleicher Impulsanzahl mittels Phasenregelung (PLL)
   mit Erzeugen eines lückenfreien internen Taktes (FI) der mehrfachen Frequenz des Auslesetaktes (FA),
   mit Erzeugen des Auslesetaktes (FA) durch Teilen der Frequenz des internen Taktes (FI),
   mit Teilen der Frequenz des Einlesetaktes (FE),
   mit gleichem Teilen der Frequenz des Auslesetaktes (FA),
   mit Vergleichen der logischen Zustände des geteilten Einlesetaktes (FE') und des geteilten Auslesetaktes (FA'),
   mit Erzeugen von Steuerimpulsen während Zeiträumen ermittelter Ungleichheit,
   mit Erzeugen eines Zusatztaktes (FZ),
   mit Summieren der Impulse des Zusatztaktes (FZ) jeweils während des Auftretens von Steuerimpulsen,
   mit Erzeugen von Schaltimpulsen (FX) jeweils beim Erreichen einer definierten Endsumme und
   mit Erzeugen eines Hilfstaktes (FH),
   **dadurch gekennzeichnet,**

daß aus dem Hilfstakt (FH) eine Folge von n Folge-Hilfstakten (FHl-FHn) und n invertierten Folge-Hilfstakten ($\overline{FHl}$-$\overline{FHn}$) abgeleitet wird, die bei gleicher Frequenz und einem Tastverhältnis 1:1 gleiche Phasenabstände derart aufweisen, daß die Summe der Phasenabstände einer Periode des Hilfstaktes (FH) entspricht,

daß eine n-fache Schaltimpulsfrequenz (nFX) erzeugt wird,

daß einer der Folge-Hilfstakte (FHx) als interner Takt (FI) durchgeschaltet wird und

daß beim Auftreten jedes Schaltimpulses (nFX) der mit seinem Phasenabstand nachfolgenden Folge-Hilfstakt (FHx+l) anstelle des bisher durchgeschalteten Folge-Hilfstaktes (FHx) durchgeschaltet wird, sobald dieser den gleichen logischen Zustand wie der bisher durchgeschaltete Folge-Hilfstakt (FHx) aufweist.

2. Verfahren nach Anspruch 1,
**dadurch gekennzeichnet,**
daß alle nicht für eine Durchschaltung vorgesehenen Folge-Hilfstakte gesperrt werden.

3. Verfahren nach Anspruch 1,
**dadurch gekennzeichnet,**
daß der Hilfstakt (FH), einer der Folge-Hilfstakte (FHl-FHn) oder der interne Takt (FI) zugleich als Zusatztakt (FZ) dient.

4. Anordnung zur Durchführung des Verfahrens nach Anspruch 1, 2 oder 3
mit einem Phasendiskriminator (3),
mit einem ersten Frequenzteiler (2), dessen Eingang als Eingang (1) für den Einlesetakt (FE) dient und dessen Ausgang mit einem ersten Eingang (4) des Phasendiskriminators (3) verbunden ist,
mit einem Summierzähler (7) zur Mittelwertbildung, dessen Steuereingang mit dem Ausgang (6) des Phasendiskriminators (3) verbunden ist,
mit einem Generator (8) für den internen Takt (FI), dessen Steuereingang (9) mit dem Ausgang des Summierzählers (7) und dessen Ausgang (11) mit dem Eingang des Summierzählers (7) verbunden ist,
mit einem zweiten Frequenzteiler (13), dessen Eingang mit dem Ausgang (11) des Generators (8) verbunden ist und dessen Ausgang als Ausgang (14) für den Auslesetakt (FA) dient,
mit einem dritten Frequenzteiler (15), dessen Eingang mit dem Ausgang des zweiten Frequenzteilers (13) und dessen Ausgang mit dem zweiten Eingang (5) des Phasendiskriminators (3) verbunden ist, und
mit einem Quarzoszillator (12),
**dadurch gekennzeichnet,**
daß der Summierzähler (7) eine n-fache Schaltimpulsfrequenz (nFX) erzeugt und
daß im Generator (8)
eine Hilfstaktfolge-Erzeugungseinrichtung (16) zur Ableitung der n Folge-Hilfstakte (FHl-FHn) und der n invertierten Folge-Hilfstakte ($\overline{FHl}$-$\overline{FHn}$), deren Eingang mit dem Quarzoszillator (12) verbunden ist,
ein erstes D-Flipflop (29), dessen Takteingang mit dem Steuereingang (9) verbunden ist,
ein Schieberegisterring (17, 18), dessen Takteingang mit dem Q-Ausgang des D-Flipflops (29) verbunden ist und
eine vom Schieberegisterring (17, 18) gesteuerte Umschalteinrichtung (19) vorgesehen sind, die jeweils einen der Ausgänge der Hilfstaktfolge-Erzeugungseinrichtung (16) mit dem Ausgang (11) des Generators (8) verbindet.

5. Anordnung nach Anspruch 4,
**dadurch gekennzeichnet,**
daß als Umschalteinrichtung (19)
n weitere D-Flipflops (25 - 28), denen Ordnungszahlen 1 bis n zugeordnet sind und deren D-Eingänge jeweils mit einem Schieberegister-Stufenausgang (Ql - Qn) gleicher Ordnungszahl und deren Takteingänge jeweils mit einem Ausgang der Hilfstaktfolge-Erzeugungseinrichtung (16) für einen invertierten Folge-Hilfstakt ($\overline{FHl}$ - $\overline{FHn}$) der zyklisch nächsten Ordnungszahl verbunden sind, n NAND-Gatter (20 - 23), denen Ordnungszahlen 1 bis n zugeordnet sind und deren erster Eingang jeweils mit einem Ausgang der Hilfstaktfolge-Erzeugungseinrichtung (16) für einen Folge-Hilfstakt (FHl - FHn) gleicher Ordnungszahl, deren zweiter Eingang mit dem Q-Ausgang eines der weiteren D-Flipflops (25 - 28) gleicher Ordnungszahl und deren dritter Eingang mit dem $\overline{Q}$-Ausgang eines der weiteren D-Flipflops (25 - 28) der zyklisch nächsten Ordnungszahl verbunden sind, und
ein weiteres NAND-Gatter (24) vorgesehen sind, dessen Eingänge jeweils mit dem Ausgang eines der anderen NAND-Gatter (20 - 23) und dessen Ausgang mit dem Ausgang (14) für den Auslesetakt (FA) verbunden sind.

## Claims

1. Method for converting a interrupted read-in clock (FE) into a uninterrupted read-out clock (FA) having the same number of pulses by means of a phase-locked loop (PLL), comprising generating a uninterrupted internal clock (FI) having a multiple frequency of the read-out clock (FA), generating the read-out clock (FA) by dividing the frequency of the internal clock (FI), dividing the frequency of the read-in clock (FE), identically dividing the frequency of the read-out clock (FA), comparing the logic states of the divided read-in clock (FE') and of the divided read-out clock (FA'), generating control pulses during time intervals of determined inequality, generating an additional clock (FZ), summing the pulses of the additional clock (FZ) respectively during the occurrence of control pulses, generating switching pulses (FX) respectively upon attainment of a defined final sum, and generating an auxiliary clock (FH), characterised in that there is derived from the auxiliary clock (FH) a sequence of n successor auxiliary clocks (FH1-FHn) and n inverted successor auxiliary clocks ($\overline{\text{FH1-FHn}}$), which given the same frequency and a pulse duty factor of 1:1 have the same phase spacings such that the sum of the phase spacings corresponds to a period of the auxiliary clock (FH), in that an n-fold switching pulse frequency (nFX) is generated, in that one of the successor auxiliary clocks (FHx) is switched through as internal clock (FI), and in that upon the occurrence of each switching pulse (nFX) the successor auxiliary clock (FHx+1) with its following phase spacing is switched through instead of the previously switched-through successor auxiliary clock (FHx) as soon as the former auxiliary clock has the same logic state as the previously switched-through successor auxiliary clock (FHx).

2. Method according to Claim 1, characterised in that all the successor auxiliary clocks not provided for switching through are inhibited.

3. Method according to Claim 1, characterised in that the auxiliary clock (FH), one of the successor auxiliary clocks (FH1-FHn) or the internal clock (FI) simultaneously serves as additional clock (FZ).

4. Arrangement for carrying out the method according to Claim 1, 2 or 3, comprising a phase discriminator (3), a first frequency divider (2) whose input serves as input (1) for the read-in clock (FE) and whose output is connected to a first input (4) of the phase discriminator (3), a summing counter (7) for mean-value generation whose control input is connected to the output (6) of the phase discriminator (3), a generator (8) for the internal clock (FI) whose control input (9) is connected to the output of the summing counter (7) and whose output (11) is connected to the input of the summing counter (7), a second frequency divider (13) whose input is connected to the output (11) of the generator (8) and whose output serves as output (14) for the read-out clock (FA), a third frequency divider (15) whose input is connected to the output of the second frequency divider (13) and whose output is connected to the second input (5) of the phase discriminator (3), and a quartz oscillator (12), characterised in that the summing counter (7) generates an n-fold switching pulse frequency (nFX), and in that there are provided in the generator (8) an auxiliary clock sequence generator (16) for deriving the n successor auxiliary clocks (FH1-FHn) and the n inverted successor auxiliary clocks ($\overline{\text{FH1-FHn}}$), whose input is connected to the quartz oscillator (12), a first D flip-flop (29), whose clock input is connected to the control input (9), a shift register ring (17, 18), whose clock input is connected to the Q output of the D flip-flop (29), and a switch-over device (19), which is controlled by the shift register ring (17, 18) and respectively connects one of the outputs of the auxiliary clock sequence generator (16) to the output (11) of the generator (8).

5. Arrangement according to Claim 4, characterised in that there are provided as the switch-over device (19) n further D flip-flops (25-28) which are assigned ordinal numbers 1 to n and whose D inputs are respectively connected to a shift register stage output (Q1 - Qn) of the same ordinal number and whose clock inputs are respectively connected to an output of the auxiliary clock sequence generator (16) for an inverted successor auxiliary clock ($\overline{\text{FH1 - FHn}}$) of the cyclically next ordinal number, n NAND gates (20 - 23) which are assigned ordinal numbers 1 to n and whose first input is respectively connected to an output of the auxiliary clock sequence generator (16) for a successor auxiliary clock (FH1-FHn) of the same ordinal number, whose second input is connected to the Q output of one of the further flip-flops (25 - 28) of the same ordinal number and whose third input is connected to the $\overline{\text{Q}}$ output of one of the further flip-

5

flops (25 - 28) of the cyclically next ordinal number, and a further NAND gate (24) whose inputs are respectively connected to the output of one of the other NAND gates (20 - 23) and whose output is connected to the output (14) for the read-out clock (FA).

**Revendications**

1. Procédé pour convertir une cadence d'enregistrement à lacunes (FE) en une cadence de lecture sans lacunes (FA) possédant des nombres identiques d'impulsions, au moyen d'une régulation de phase (PLL), mettant en oeuvre

    la production d'une cadence interne sans lacunes (FI) possédant une fréquence multiple de la cadence de lecture (FA),

    la production de la cadence de lecture (FA) par division de la fréquence de la cadence interne (FI),

    une division de la fréquence de la cadence d'enregistrement (FE),

    la même division de la fréquence de la cadence de lecture (FA),

    la comparaison des états logiques de la cadence d'enregistrement divisée (FE') et de la cadence de lecture divisée (FA'),

    la production d'impulsions de commande pendant des intervalles de temps présentant une différence déterminée, la production d'une cadence supplémentaire (FZ),

    la sommation des impulsions de la cadence supplémentaire (FZ) respectivement pendant l'apparition d'impulsions de commande,

    la production d'impulsions de commutation (FX) respectivement lorsqu'une somme finale définie est atteinte, et

    la production d'une cadence auxiliaire (FH),

    caractérisé par le fait

    qu'à partir de la cadence auxiliaire (FH) on obtient une suite de n cadences auxiliaires (FH1-FHn) et n cadences auxiliaires inversées (FH1-FHn), qui possèdent, pour une même fréquence et un taux d'impulsions égal à 1:1, des écarts de phase identiques de sorte que la somme des écarts de phase correspond à une période de la cadence auxiliaire (FH),

    qu'on produit une fréquence d'impulsions de commutation (nFX) n fois supérieure,

    qu'on transmet l'une des cadences auxiliaires (FHx) en tant que cadence interne (FI), et

    que lors de l'apparition de chaque impulsion de commutation (nFX), on transmet la cadence auxiliaire (FHx+1) qui arrive ensuite avec son écart de phase, à la place de la cadence auxiliaire (FHx) transmise jusqu'alors, dès que cette cadence possède le même état logique que la cadence auxiliaire (FHx) transmise jusqu'alors.

2. Procédé suivant la revendication 1, caractérisé par le fait que toutes les cadences auxiliaires non prévues pour leur transmission sont bloquées.

3. Procédé suivant la revendication 1, caractérisé par le fait que la cadence auxiliaire (FH), l'une des cadences auxiliaires (FH1-FHn) de la suite ou la cadence interne (FI) est utilisée simultanément en tant que cadence supplémentaire (FZ).

4. Dispositif pour la mise en oeuvre du procédé suivant la revendication 1, 2 ou 3, comportant un discriminateur de phase (3),

    un premier diviseur de fréquence (2), dont l'entrée est utilisée comme entrée (1) pour la cadence d'enregistrement (FE) et dont la sortie est raccordée à une première entrée (4) du discriminateur de phase (3),

    un compteur additionneur (7) pour former la valeur moyenne et dont l'entrée de commande est raccordée à la sortie (6) du discriminateur de phase (3),

    un générateur (8) servant à délivrer la cadence interne (FI) et dont l'entrée de commande (9) est raccordée à la sortie du compteur additionneur (7) et dont la sortie (11) est raccordée à l'entrée du compteur additionneur (7),

    un second diviseur de fréquence (13), dont l'entrée est raccordée à la sortie (11) du générateur (8) et dont la sortie est utilisée en tant que sortie (14) pour la cadence de lecture (FA),

    un troisième diviseur de fréquence (15), dont l'entrée est raccordée à la sortie du second diviseur de fréquence (13) et dont la sortie est raccordée à la seconde entrée (5) du discriminateur de phase (3), et

    un oscillateur à quartz (12),

    caractérisé par le fait

que le compteur additionneur (7) produit une fréquence (nFX) d'impulsions de commutation n fois supérieure, et

que dans le générateur (8)

un dispositif (7) de production de la suite des cadences auxiliaires, qui sert à dériver les n cadences auxiliaires (FH1-FHn) et les n cadences auxiliaires inversées ($\overline{FH1-FHn}$), et dont l'entrée est raccordée à l'oscillateur à quartz (12), une première bascule bistable de type D (29), dont l'entrée de cadence est raccordée à l'entrée de commande (9),

un anneau de registres à décalage (17,18), dont l'entrée de cadence est raccordée à la sortie Q de la bascule bistable de type D (29), et

il est prévu un dispositif de commutation (19), qui est commandé par l'anneau de registres à décalage (17,18) et relie respectivement l'une des sorties du dispositif (16) de production de la suite des cadences auxiliaires à la sortie (11) du générateur (8).

5. Dispositif suivant la revendication 4,
caractérisé par le fait
qu'en tant que dispositif de commutation (19),
n bascules bistables de type D supplémentaires (25-28), auxquelles sont associés des rangs 1 à n et dont les entrées D sont raccordées respectivement à une sortie (Q1-Qn) d'étage de registre d décalage de même rang et dont les entrées de cadence sont raccordées respectivement à une sortie du dispositif (16) de production de la suite de cadences auxiliaires pour une cadence auxiliaire inversée ($\overline{FH1-FHn}$) possédant le rang cycliquement immédiatement suivant, n portes NON-ET (20-23), dont les rangs sont associés à 1 à n et dont la première entrée est raccordée respectivement à une sortie du dispositif (16) de production de la suite de cadences auxiliaires pour une cadence auxiliaire (FH1-FHn) de même rang, et dont la seconde entrée est raccordée à la sortie Q de l'une des autres bascules bistables de type D (25-28) de même rang et dont la troisième entrée est raccordée à la sortie ($\overline{Q}$) de l'une des autres bascules bistables de type D (25-28) possédant le rang cycliquement immédiatement suivant, et

qu'il est prévu une autre porte NON-ET (24), dont les entrées raccordées respectivement à la sortie des autres portes NON-ET (20-23) et dont la sortie est raccordée à la sortie (14) pour la cadence de lecture (FA).

7

## FIG 1

FE'

PLL

FZ=FI

FI=FH−FX

## FIG 2

n·FX

FH−FX

FH1
FH2
FH3

FH

FHn-1
FHn

FIG 3

FI=FH-FX

EP 0 393 341 B1

# FIG 4

FH1

FH2

FI=FH-FX